(19)

Europäisches
Patentamt
European
Patent Office
Office européen
des brevets

(11) **EP 4 613 903 A1**

(12) **EUROPEAN PATENT APPLICATION**
published in accordance with Art. 153(4) EPC

(43) Date of publication:
**10.09.2025 Bulletin 2025/37**

(21) Application number: **23884398.1**

(22) Date of filing: **24.08.2023**

(51) International Patent Classification (IPC):
*C22C 38/20* (2006.01)     *C22C 38/24* (2006.01)
*C22C 38/26* (2006.01)     *C22C 38/02* (2006.01)
*C22C 38/04* (2006.01)     *C22C 38/06* (2006.01)
*C21D 1/25* (2006.01)      *C21D 9/40* (2006.01)

(52) Cooperative Patent Classification (CPC):
Y02E 10/72; Y02P 10/20

(86) International application number:
**PCT/CN2023/114602**

(87) International publication number:
**WO 2024/093461 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2022 CN 202211380397**

(71) Applicant: **Maanshan Iron & Steel Co., Ltd.
Maanshan, Anhui 243071 (CN)**

(72) Inventors:
• **YANG, Zhiqiang
  Maanshan, Anhui 243071 (CN)**
• **WANG, Kaizhong
  Maanshan, Anhui 243071 (CN)**
• **HU, Fangzhong
  Maanshan, Anhui 243071 (CN)**

• **WANG, Zimin
  Maanshan, Anhui 243071 (CN)**
• **CHEN, Shijie
  Maanshan, Anhui 243071 (CN)**
• **WU, Lin
  Maanshan, Anhui 243071 (CN)**
• **CHEN, Enxin
  Maanshan, Anhui 243071 (CN)**
• **ZHUANG, Zhen
  Maanshan, Anhui 243071 (CN)**
• **YANG, Shaopeng
  Maanshan, Anhui 243071 (CN)**
• **JIN, Guozhong
  Maanshan, Anhui 243071 (CN)**

(74) Representative: **De Clercq & Partners
Edgard Gevaertdreef 10a
9830 Sint-Martens-Latem (BE)**

(54) **STEEL FOR ECONOMICAL, LONG-SERVICE-LIFE AND HIGH-POWER WIND POWER YAW BEARING RING, BEARING RING AND PRODUCTION PROCESS THEREFOR**

(57)     A steel for an economical, long-service-life and high-power wind power yaw bearing ring, a bearing ring and a production process therefor, which belong to the field of alloy steel. By controlling the proportion of chemical components and performing two instances of quenching and tempering in the present invention: 1) quenching of primary quenching and tempering, $S-T_1/20 \leq t_1 \leq S-T_1/80$, and tempering of primary quenching and tempering, $S-T_2/10 \leq t_2 \leq S-T_2/50$; and 2) quenching of secondary quenching and tempering, $S-T_3/10 \leq t_3 \leq S-T_3/50$, and tempering of secondary quenching and tempering, $1.5 \times S-T_4/10 \leq t_4 \leq 1.5 \times S-T_4/50$, the manufactured bearing ring has a tensile strength $\geq 950$ MPa at the 1/2 wall thickness (wall thickness $\geq 240$ mm), a yield strength $\geq 850$ MPa, $-40°CKV_2 \geq 80$ J, and a contact fatigue life $\geq 1$ million times under the action of a contact stress of 2,000 MPa, which satisfy the requirements for 20-year service for high-power wind power.

EP 4 613 903 A1

(a)

(b)

FIG. 1

**Description**

This application claims priority to Chinese Patent Application No. 202211380397.2, titled "STEEL FOR ECONOMICAL, LONG-SERVICE-LIFE AND HIGH-POWER WIND POWER YAW BEARING RING, BEARING RING AND PRODUCTION PROCESS THEREFOR", filed on November 04, 2022 with the China National Intellectual Property Administration, which is incorporated herein by reference in its entirety.

**FIELD**

The present disclosure relates to the field of alloy steel, and in particular to a steel applicable to an economical long-service-life yaw bearing ring for high-power wind power, a bearing ring and a method for manufacturing thereof.

**BACKGROUND**

Under the background of "carbon peaking and carbon neutrality", the demand for clean energy is increasing, and wind power as a clean energy has attracted much attention. By 2021, Chinese wind power installed capacity will exceed 300,000 megawatts, accounting for more than one-third of the world. However, the unit power of wind power in China is relatively low, generally concentrated at 4 megawatts. The unit power of wind power in other countries has reached 8 megawatts. Despite this, Chinese marine wind power development resource potential at a height of 70 meters and a water depth of 5-50 meters is about 500,000 megawatts. Therefore, the in-depth development of large offshore wind turbines is a development trend of the wind power industry in the future.
The large-scale development of wind power has led to an increase in the size of the key components, bearings, of the wind power. According to research, the outer diameter of the yaw bearing ring of a 1.5MW wind power is about 2.1m, while the outer diameter of the yaw bearing ring of a 6MW wind power is 4.5 meters, which is 2.1 times larger. In addition, as the bearing size increases, the wall thickness of the bearing ring increases, resulting in poor consistency in the cross-sectional performance of the bearing ring. Therefore, requirements for strength, toughness and uniformity of the bearing rings for high-power wind power are increased. In JB/T 10705, it is stated that "materials with equivalent or better performance can be used" to manufacture yaw bearing rings for wind power. Chinese offshore wind power has developed rapidly, but the unit power is generally lower than 6MW at present, mainly because the key equipment materials cannot be completely self-sufficient. Therefore, it is urgent to develop a steel applicable to yaw bearing rings for high-power offshore wind power.
Patent CN 104726783A discloses a steel applicable to yaw and pitch bearing rings for wind power and its preparation method. The bearing rings are designed with high Ni (1.30-1.70%). The tensile strength at 12.5mm below the bearing ring after heat treatment is ≥1200MPa, and the V-type impact energy at -20°C is ≥32J, meeting the performance requirements of yaw bearing rings for 5MW wind power. However, in the patent, the addition of a large amount of precious metal Ni will increase the material cost and is not economical enough. In addition, the material has not been tested and evaluated for the fatigue performance and corrosion resistance of the bearings for marine wind power. The application support of the material is insufficient.
Patent CN 104178695A discloses manufacturing bearing rings for wind power by using medium carbon boron microalloy steel. The tensile strength of the bearing rings after heat treatment is ≥1090MPa, and the V-type impact energy at -20°C is ≥29J. In the patent, the overall strength and toughness of the material are not high, heat treatment is carried out, and the holding time of the quenching is 50-130 minutes. The thickness of the produced bearing ring is relatively thin, which cannot meet needs of thick-walled performance of bearing rings for high-power wind power. The fatigue performance of the bearings for marine wind power and the like has not been tested and evaluated, and the application support of the material is insufficient. In addition, the patent will increase the material cost by adding a large amount of precious metal Ni, rendering the economy insufficient.
Therefore, it is urgent to develop a steel applicable to an economical long-service-life yaw bearing ring for high-power wind power and its heat treatment process based on the service characteristics of the yaw bearings for high-power wind power to meet the development needs of high-power wind power.

**SUMMARY**

1. Problem to be solved

In view of the problem that the conventional bearing ring for wind power in Ni-free system has poor low-temperature toughness, the present application provides a steel applicable to an economical long-service-life yaw bearing ring for high-power wind power, a bearing ring and a method for manufacturing thereof. The produced bearing ring maintains high low-temperature toughness in Ni-free system.

2. Technical solution

In order to solve above-mentioned problems, the technical solution adopted by the present application is as follows:

The present application discloses a steel applicable to an economical long-service-life yaw bearing ring for high-power wind power, comprising, by weight percentage: C 0.47% to 0.57%, Si 0.10% to 0.30%, Mn 0.70% to 0.90%, Cr 1.30% to 1.50%, Mo 0.30% to 0.50%, Cu 0.030% to 0.050%, V 0.035% to 0.075%, Nb 0.010% to 0.030%, Cu 0.030% to 0.050%, Al 0.015% to 0.025%, P≤0.015%, S≤0.010%, O≤0.0040%, N≤0.0080%, with the balance being Fe and other inevitable impurities. The ratio of the chemical components should meet the following requirements:

1)

$$10.5 \leq (0.54 \times C\%) \times (1+3.34 \times Mn\%) \times (1+0.7 \times Si\%) \times (1.2+0.36 \times Cu\%) \times (1+0.37 \times Ni\%) \times (1+2.61 \times Cr\%) \times (1+3 \times Mo\%) \times (1+0.6 \times V\%) \times (1+0.7Nb\%) \leq 13.8;$$

2)

$$0.24\% \leq C\% + (Mn\%)/6 - (Cr\% + Mo\% + V\% + Ti\%)/5 + (C\%u)/15;$$

3)

$$0.60\% \leq (-3) \times Si\% + 0.8 \times Mn\% + 1.2 \times Mo\% + 1 \times Cu\% + 2 \times V\% + 2 \times Nb\%.$$

The heat treatment process parameters should meet the following requirements:

1) Quenching in the first quenching and tempering, $S\text{-}T_1/20 \leq t_1 \leq S\text{-}T_1/80$; tempering in the first quenching and tempering, $S\text{-}T_2/10 \leq t_2 \leq S\text{-}T_2/50$;

2) Quenching in the second quenching and tempering, $S\text{-}T_3/10 \leq t_3 \leq S\text{-}T_3/50$; tempering in the second quenching and tempering, $1.5 \times S\text{-}T_4/10 \leq t_4 \leq 1.5 \times S\text{-}T_4/50$.

The present application provides a heat treatment method for the steel. The obtained steel has excellent toughness and contact fatigue performance, and is suitable for manufacturing yaw bearings for high-power wind power (wall thickness of the bearing ring ≥240mm). The present application also discloses a process for manufacturing a bearing ring using the steel.

C: C is the cheapest strengthening element in steel. For every 0.1% increase in solid solution C, the strength can be increased by about 450MPa. C forms a precipitation phase with the alloy elements in the steel, which plays a role in precipitation strengthening. C can significantly improve the hardenability and enable the center of the bearing ring with a large wall thickness to obtain a martensite structure. However, as the content of C increases, plasticity and toughness decrease, so the content of C is controlled at 0.47% to 0.57%.

Si: Si is an effective solid solution strengthening element in steel, which improves the strength and hardness of steel. Si can play a role in deoxidizing during steelmaking and is a commonly used deoxidizer. However, Si is easy to segregate at austenite grain boundaries, which can reduce the grain boundary bonding force and cause brittleness. In addition, Si is easy to cause element segregation in steel. Therefore, the content of Si is controlled at 0.10% to 0.30%.

Mn: Mn can play a role in solid solution strengthening, and its solid solution strengthening ability is weaker than Si. Mn is an austenite stabilizing element, and Mn can significantly improve the hardenability of steel and reduce the decarburization of steel. Mn combined with S can prevent hot brittleness caused by S. However, excessive Mn will reduce the plasticity of steel. Therefore, the content of Mn is controlled at 0.70% to 0.90%.

Cr: Cr is a carbide-forming element. Cr can improve the hardenability and strength of steel, but Cr is easy to cause temper brittleness. Cr can improve the oxidation resistance and corrosion resistance of steel, but if the content of Cr is too high, it will increase the crack sensitivity. The content of Cr should be controlled at 1.30% to 1.50%.

Mo: Mo mainly improves the hardenability and heat resistance of steel. Mo dissolved in the substrate can keep the structure of steel at a high stability during tempering, and can effectively reduce the segregation of impurity elements such as P, S and As at the grain boundaries, so as to improve the toughness of steel and reduce temper brittleness. Mo reduces the stability of $M_7C_3$. When the content of Mo is high, needle-shaped $Mo_2C$ will be formed, which will lead to a decrease in the content of Mo in the substrate. Mo can improve the strength of steel through the combined effects of solid solution strengthening and precipitation strengthening, and can also change the toughness of steel by changing the precipitation of carbides. Therefore, Mo is controlled at 0.30% to 0.50%.

V: V is an element having a strong combining ability with C and N, and V (C, N) forms fine dispersions and maintains a coherent relationship with the substrate, which can play a role in strengthening and refining the structure. The content of V is controlled at 0.035% to 0.075%.

Nb: Nb is the main microalloying element in steel, which exists in steel as a replacement solute atom. Nb atoms are larger than iron atoms and are easily segregated on dislocation lines, and have a strong dragging effect on dislocation climbing, thereby achieving the purpose of refining austenite grains. Grain refinement can improve the strength and toughness of steel, and a small amount of Nb can stably refine grains, improve strength, toughness and fatigue properties. The misfit between carbonitride of Nb and the substrate is moderate, which is beneficial to the strengthening and toughening of steel. When the content of Nb is too little, less than 0.010%, the dislocation dragging effect is extremely small and cannot play a role in improving toughness. Too much Nb addition will lead to large size of the carbonitrides, forming large-sized inclusions and thus losing the toughening effect. In addition, Nb is expensive, so the content range of Nb can be controlled at 0.010% to 0.030%.

Cu: Cu can expand the austenite phase region. Cu elemental substance can be used as the second phase to significantly improve the strength, and can improve the tempering stability and strength of the structure. However, excessive Cu will cause Cu brittleness. Therefore, the content of Cu is controlled at 0.030% to 0.050%.

Al: Al is the main deoxidizer for steelmaking. Al combines with N to form fine and dispersed AlN, and maintains a coherent relationship with the substrate, which can play a role in strengthening and refining the organization, and can increase the resistance to fatigue crack initiation and expansion, so as to improve the endurance strength of steel. The content of Al is controlled at 0.015% to 0.035%.

O and N: T.O forms oxide inclusions in steel, and T.O is controlled to be $\leq$ 0.0040%; N can form nitrides in steel, forming fine precipitation phases to refine the structure, and can also precipitate $Fe_4N$, which has a slow diffusion rate, causing the steel to produce aging and reduce the processing performance. Therefore, the N content is controlled within 0.0080%.

Yaw bearings for igh-power wind power are large in size and need to ensure sufficient strength and toughness. The addition of alloying elements can effectively improve the hardenability and thus improve the strength and toughness. Through research, it is found that among the alloying elements, Mn is the most effective in improving hardenability and strength, with a coefficient of 3.34; Mo also contributes greatly to hardenability and strength by improving tempering stability and interacting with Mn, with a coefficient of 3.0; Cr is the main substitutional solid solution element and carbide forming element, and the coefficient of its contribution to strength is 2.16; Cu does not form carbides in steel, and changes the lattice morphology through solid solution strengthening, thereby improving the hardenability and strength of steel, with coefficients of 0.37 and 0.36 respectively; C is a non-metallic element and is the most important interstitial solid solution strengthening element in steel, which has an effect on both strength and toughness, so its coefficient is 0.54; Si is a non-metallic element and is also the main solid solution strengthening element in steel, and its contribution to the performance of steel is 0.70. As the strength of steel is inversely proportional to plasticity and toughness, that is, high strength will lead to reduced plasticity and toughness, in order to ensure the comprehensive performance of steel, the strength cannot be increased blindly. The strengthening factor in the steel is represented by A, and $10.5 \leq A \leq 13.8$,

$$A=(0.54 \times C\%) \times (1+3.34 \times Mn\%) \times (1+0.7 \times Si\%) \times (1.2+0.36 \times Cu\%) \times (1+0.37 \times Ni\%) \times (1+2.61 \times Cr\%) \times (1+3 \times Mo\%) \times (1+0.6 \times V\%) \times (1+0.7Nb\%).$$

Bearings require good contact fatigue performance during service, so the ratio of C, Mn, Cr, Mo, Cu, V, and Nb needs to be limited. C and Mn can significantly improve the shallow hardness of steel, improve wear resistance and thus improve contact fatigue performance. Cr, Mo, V, and Nb can form a second phase with C and N in steel. Although the second phase in steel can increase the strength, it is still different from the substrate of steel. If the size is larger, it can form a source of contact fatigue cracks, so it is detrimental to contact fatigue. Cu achieves atomic scale bonding with the substrate through solid solution strengthening, which is beneficial to contact fatigue performance. However, the carbonitride formed by Nb in steel has the characteristics of high hardness, and its size is difficult to control, which can easily cause peeling and reduce the contact fatigue performance. Therefore, the present application controls the Nb content on the one hand, and regulates the size of the Nb carbonitride through two quenching and tempering heat treatments on the other hand. The contact fatigue factor in the steel is represented by Y, and $Y \geq 0.24\%$,

$$Y = C\%+(Mn\%)/6-(Cr\%+Mo\%+V\%+Nb\%)/5+(Cu\%)/15.$$

In order to obtain better low-temperature toughness and meet needs of bearings working in low-temperature environments, in the present application, no precious metal Ni is added, and the toughness requirements in low-temperature environments are met through a reasonable ratio of alloying elements and micro-alloying elements. Since the addition of precious metal Ni is reduced in the steel, and Ni is beneficial to low-temperature toughness, in order to ensure the low-temperature toughness of the steel, it is necessary to control the coordination of the elements such as Si, Mn, Cr, Mo, and Cu. Si significantly deteriorates the low-temperature toughness and increases temper brittleness, so the coefficient of Si is (-3). Mn can significantly affect the selection of variants during phase change and increase the variety of variants during the phase change, thereby improving low-temperature toughness. However, Mn is prone to segregation, so the coefficient of Mn is 0.8. Mo improves low-temperature toughness mainly by improving tempering stability, but its contribution to low-temperature toughness is limited, so the coefficient of Mo is 1.2. Cu can improve the atomic level of bonding with the substrate of the steel, which is beneficial to the toughness, so the coefficient of Cu is 1. V and Nb hinder the crack expansion path after impact through the second phase pinning dislocation, so the coefficients of V and Nb are both 2; that is, $Z \geq 0.60\%$,

$$Z = (-3) \times Si\% + 0.8 \times Mn\% + 1.2 \times Mo\% + 1 \times Cu\% + 2 \times V\% + 2 \times Nb\%.$$

The present application further discloses the above-mentioned steel applicable to the yaw bearing ring and a method for manufacturing the yaw bearing ring: electric arc furnace or converter smelting $\rightarrow$ LF furnace refining $\rightarrow$ RH or VD vacuum degassing $\rightarrow$ $\Phi 380mm$ to $\Phi 700mm$ round billet continuous casting $\rightarrow$ round billet heating $\rightarrow$ forging $\rightarrow$ punching $\rightarrow$ ring rolling (semi-finished product) $\rightarrow$ heat treatment $\rightarrow$ machining $\rightarrow$ flaw detection $\rightarrow$ packaging and warehousing.

The yaw bearing ring adopts two quenching and tempering heat treatments. The key heat treatment processes are:

First quenching and tempering: the furnace temperature of the semi-finished yaw bearing ring after ring rolling is $\leq 600°C$, the heating temperature of the first quenching ($T_1$, °C) is 900 to 1000°C, and the holding time of the first quenching ($t$, min) is determined by wall thickness of the bearing ring ($S$, mm) and the heating temperature of the first quenching ($T_1$, °C), $S-T_1/20 \leq t_1 \leq S-T_1/80$; the heating temperature of the first tempering ($T_2$, °C) is 650 to 700°C, the holding time of the first tempering ($t_2$, min) is determined by wall thickness of the bearing ring ($S$, mm) and the heating temperature of the first tempering ($T_2$, °C), $S-T_2/10 \leq t_2 \leq S-T_2/50$, and then water cooling is performed.

Second quenching and tempering: the heating temperature of the second quenching ($T_3$, °C) is 800 to 900°C, and the holding time ($t_3$, min) is determined by wall thickness of the bearing ring ($S$, mm) and the heating temperature of the second quenching ($T_3$, °C), $S-T_3/10 \leq t_3 \leq S-T_3/50$, and then water cooling is performed; the heating temperature of the second tempering ($T_4$, °C) is 600 to 700°C, the holding time of the second tempering ($t_4$, min) is determined by wall thickness of the bearing ring ($S$, mm) and the heating temperature of the second tempering ($T_4$, °C), $1.5 \times S-T_4/10 \leq t_4 \leq 1.5 \times S-T_4/50$, and then water cooling is performed.

The present application reduces the use of precious metal Ni, so the low-temperature toughness of steel is poor. In order to achieve the characteristic performance of the product, the heat treatment process needs to be innovatively optimized. Although the two quenching and tempering processes become more complicated, the overall cost is reduced. The present application adopts two quenching and tempering processes because after the first quenching and tempering, the structural refinement of the steel is not sufficient, which is not enough to make up for the lack of precious metals; in the second quenching and tempering, the steel is heated and cooled again to further refine the structure and carbides, and at the same time, the second heating temperature is controlled to be lower than the first heating temperature so that the precipitated phase of the steel does not re-dissolved during the heating process, thereby ensuring a small grain size and improving the overall performance of steel.

The austenite phase transformation point is affected by the composition, and the normalizing temperature and quenching heating temperature are determined by the austenite phase transformation point. The tempering heating temperature is selected according to the type, content and size of the required precipitated phase.

The heating temperature of the first quenching and tempering process in the present application is 900-1000°C. On the one hand, it ensures that the bearing ring is completely austenitized at this temperature, and at the same time, the temperature is controlled not to be higher than 1000°C to ensure that the size of the second phase precipitated during the forging process is not too coarse, thereby helping to improve the toughness of subsequent products. After tempering, the precipitated phases are mainly $M_{23}C_6$ and MX type, which effectively improves the strength of the steel.

The temperature of the second quenching and tempering process is lower than that of the first quenching and tempering process. On the one hand, the first precipitated phase can be used as a nucleation site to nucleate the grains again, thereby refining the grains. On the other hand, it helps to reduce the re-dissolution of the precipitated phase during the austenitization process, which can improve toughness and fatigue properties. In the second tempering, the heating temperature of the tempering is low, so that the growth activation energy of the precipitated phase is insufficient, ensuring that the precipitated phase is small. In addition, the type of precipitated phases can be controlled so that the precipitated phases are $M_7C_3$, $M_{23}C_6$ and MX. Multiple precipitated phases can enrich the composition of the steel grade and avoid excessive size of a single phase and reduce fatigue performance.

The produced bearing ring has a tensile strength of ≥950MPa, a yield strength of ≥850MPa, and a $KV_2$ at -40°C≥80J at 1/2 wall thickness (wall thickness ≥240mm); under the action of 2000MPa of contact stress, the contact fatigue life is ≥1 million times, which meets the service needs of high-power wind power for 20 years.

3. Beneficial effects

Compared with the conventional technology, beneficial effects of the present application are as follows:

(1) The high-strength, high-toughness, and high-contact fatigue yaw bearing ring for high-power wind power of the present application can maintain high low-temperature toughness without the addition of precious metal Ni through reasonable chemical ratio and heat treatment process;

(2) The high-strength, high-toughness, and high-contact fatigue yaw bearing ring for high-power wind power of the present application has a tensile strength of ≥950MPa, a yield strength of ≥850MPa, and a $KV_2$ of ≥80J at -40°C at 1/2 wall thickness (wall thickness ≥240mm). Under the action of 2000MPa of contact stress, the contact fatigue life is ≥1 million times, which meets the service requirement of high-power wind power for 20 years.

**BRIEF DESCRIPTION OF THE DRAWINGS**

The technical solution of the present application will be further described in detail below in conjunction with the accompanying drawings and embodiments, but it should be noted that these drawings are designed only for explanatory purposes and are therefore not intended to limit the scope of the present application. In addition, unless otherwise specified, these drawings are intended only to conceptually illustrate the structural configuration described herein and are not necessarily drawn to scale.

FIG. 1 is a microscopic morphology of the bearing ring at 1/2 wall thickness obtained in Example 1 of the present application, (a) after the first quenching; (2) after the second quenching.

FIG. 2 is a microscopic morphology of the bearing ring at 1/2 wall thickness obtained in Comparative Example 2 of the present application, (a) after the first quenching; (2) after the second quenching.

FIG. 3 is an EBSD analysis of the bearing ring at 1/2 wall thickness obtained in Example 1.

FIG. 4 is an EBSD analysis of the bearing ring at 1/2 wall thickness obtained in Comparative Example 2.

**DETAILED DESCRIPTION OF EMBODIMENTS**

The following detailed description of exemplary embodiments of the present application refers to accompanying drawings, which form a part of the description. In the drawings, exemplary embodiments of the present application are shown as examples. Although these exemplary embodiments are described in sufficient detail to enable those skilled in the art to implement the present application, it should be understood that other embodiments may be implemented and various changes may be made to the present application without departing from the spirit and scope of the present application. The following embodiments of the present application are described in more detail, which is not intended to limit the scope of the claimed present application, but is merely for illustrative and non-limiting description of the features and characteristics of the present application, so as to propose the best way to carry out the present application and to enable those skilled in the art to implement the present application. Therefore, the scope of the present application is limited only by the appended claims.

The present application discloses a steel applicable to an economical long-service-life yaw bearing ring for high-power wind power, comprising by weight percentage, C 0.47%-0.57%, Si 0.10%-0.30%, Mn 0.70%-0.90%, Cr 1.30%-1.50%, Mo 0.30%-0.50%, Cu 0.030%-0.050%, V 0.035%-0.075%, Nb 0.010%-0.030%, Cu 0.030%-0.050%, Al 0.015%-0.025%, P≤0.015%, S≤0.010%, O≤0.0040%, with the balance being Fe and other inevitable impurities. The ratio of the chemical components should meet following requirements:

1)

$10.5 ≤ (0.54×C\%)×(1+3.34×Mn\%)×(1+0.7×Si\%)×(1.2+0.36×Cu\%)×(1+0.37×Ni\%)×(1+2.61×Cr\%)×(1+3×Mo\%)×(1+0.6×V\%)×(1+0.7Nb\%) ≤ 13.8$;

2)

$$0.24\% \leq C\%+(Mn\%)/6-(Cr\%+Mo\%+V\%+Nb\%)/5+(Cu\%)/15;$$

3)

$$0.60\% \leq (-3)\times Si\%+0.8\times Mn\%+1.2\times Mo\%+1\times Cu\%+2\times V\%+2\times Nb\%.$$

The heat treatment process parameters should meet following requirements:

1) quenching for first quenching and tempering: $S-T_1/20 \leq t_1 \leq S-T_1/80$; tempering for first quenching and tempering: $S-T_2/10 \leq t_2 \leq S-T_2/50$.

2) quenching for second quenching and tempering, $S-T_3/10 \leq t_3 \leq S-T_3/50$; tempering for second quenching and tempering, $1.5\times S-T_4/10 \leq t_4 \leq 1.5\times S-T_4/50$.

The present application provides a heat treatment method for the steel, and the obtained steel has excellent toughness and contact fatigue performance, and is suitable for manufacturing yaw bearings for high-power wind power (wall thickness of the bearing ring ≥240mm). The present application also discloses a process for producing bearing rings using the steel.

The present application adopts a steel grade with a specific composition. The composition of the steel grade of the example and the comparative example is shown in Table 1.

Table 1 Chemical composition of the example of the present application (wt%)

| Steel grade | Example 1 | Example 2 | Example 3 | Comparative example 1 | Comparative example 2 | Comparative example 3 |
|---|---|---|---|---|---|---|
| C | 0.49 | 0.52 | 0.52 | 0.54 | 0.51 | 0.48 |
| Si | 0.13 | 0.12 | 0.25 | 0.25 | 0.28 | 0.19 |
| Mn | 0.74 | 0.79 | 0.72 | 0.82 | 0.78 | 0.76 |
| Cr | 1.45 | 1.39 | 1.34 | 1.41 | 1.32 | 1.42 |
| Mo | 0.37 | 0.39 | 0.48 | 0.42 | 0.39 | 0.42 |
| V | 0.042 | 0.039 | 0.071 | 0.065 | 0.054 | 0.072 |
| Nb | 0.013 | 0.027 | 0.028 | 0.018 | 0.025 | 0.025 |
| Cu | 0.035 | 0.038 | 0.038 | 0.045 | 0.042 | 0.049 |
| Al | 0.019 | 0.02 | 0.023 | 0.023 | 0.018 | 0.021 |
| P | 0.009 | 0.013 | 0.01 | 0.012 | 0.008 | 0.007 |
| S | 0.009 | 0.007 | 0.009 | 0.002 | 0.004 | 0.005 |
| N | 0.0062 | 0.0076 | 0.0055 | 0.0044 | 0.0067 | 0.0064 |
| O | 0.0036 | 0.0031 | 0.0029 | 0.0032 | 0.0026 | 0.0032 |
| A value | 10.96 | 12.17 | 13.78 | 14.98 | 12.67 | 12.34 |
| Y value | 0.24 | 0.29 | 0.26 | 0.29 | 0.29 | 0.22 |
| Z value | 0.79 | 0.91 | 0.64 | 0.62 | 0.45 | 0.79 |

The production process of the steel of the present application is as follows:

Electric furnace smelting: oxygen was determined before steel was tapped, and steel retention operation was adopted during steel tapping to avoid slag carryover;

LF furnace: elements such as C, Si, Mn, Cr, Mo, V, Nb, Cu, and the like were adjusted to target values;

Vacuum degassing: pure degassing time was ≥15 minutes, and the [H] content was guaranteed to be ≤1.5ppm after vacuum treatment to avoid white spots in the steel to cause hydrogen embrittlement;

Continuous casting: a target temperature of the molten steel in the tundish was controlled at 10 to 40°C above the liquidus temperature, and φ380mm to φ700mm round billets were continuously cast.

Manufacturing route of the bearing ring: round billet (diameter 600 and 700mm) heating → forging → punching → ring rolling (semi-finished product).

Heat treatment of the bearing ring: heating in a trolley furnace → insulation → normalizing → quenching → tempering → insulation → water cooling.

Processing route of the bearing ring: rough turning of the bearing ring → flaw detection →fine turning of the valve body → grinding → flaw detection → packaging and warehousing.

The performance test method is as follows:

Organization: Samples were taken from the extension of the bearing ring, and samples were taken from the surface layer of the extension at 12.5mm and 1/2 thickness (thickness is 240mm) for metallographic and grain size analysis.

Table 2 List of forging process conditions of the examples and comparative examples of the present application.

| Steel grade | Heat treatment process | |
|---|---|---|
| | First quenching and tempering | Second quenching and tempering |
| Example 1 | The wall thickness of the bearing ring was 240mm, the heating temperature of the first quenching was 1000°C, the holding time of the first quenching was 195min; the first tempering | The heating temperature of the second quenching was 900°C, the holding time of the second quenching was 160min; the heating temperature of the second tempering |
| Example 2 | The wall thickness of the bearing ring was 240mm, the heating temperature of the first quenching was 900°C, the holding time of the first quenching was 220min; the heating temperature of the first tempering | The heating temperature of the second quenching was 800°C, the holding time of the second quenching was 220min; the heating temperature of the second tempering |
| Example 3 | The wall thickness of the bearing ring was 240mm, the heating temperature of the first quenching was 950°C, the holding time of the first quenching was 210min; the heating temperature of the first tempering | The heating temperature of the second quenching was 850°C, the holding time of the second quenching was 180min; the heating temperature of the second tempering |
| Comparative Example 1 | The wall thickness of the bearing ring was 240mm, the heating temperature of the first quenching was 1100°C, the holding time of the first quenching was 260min; the first tempering | The heating temperature of the second quenching was 880°C, the holding time of the second quenching was 180min; the heating temperature of the second tempering |
| Comparative Example 2 | The wall thickness of the bearing ring was 240mm, the heating temperature of the first quenching was 950°C, the holding time of the first quenching was 210min; the heating temperature of the first tempering | The heating temperature of the second quenching was 820°C, the holding time of the second quenching was 400min; the heating temperature of the second tempering |
| Comparative Example 3 | The wall thickness of the bearing ring was 240mm, the heating temperature of the first quenching was 1000°C, the holding time of the first quenching was 195min; the first tempering | The heating temperature of the second quenching was 860°C, the holding time of the second quenching was 190min; the heating temperature of the second tempering |

Performance: Samples were taken from the extension of the bearing ring, and tensile, impact, and contact fatigue specimens were taken from the surface of the extension at 12.5 mm and 1/2 thickness (thickness was 240 mm).

Mechanical performance tests were performed in accordance with GB/T228, GB/T229, and JB/T 10510. The heat treatment process is shown in Table 2, and the mechanical properties are shown in Table 3.

Table 3 Fatigue performance test results of the examples and the comparative examples in the present application.

| Steel grade | Sampling position | Structure | Grain size/$\mu$m | Properties after heat treatment | | | | | | Contact fatigue life under 2000MPa of contact stress (10,000 times) |
|---|---|---|---|---|---|---|---|---|---|---|
| | | | | $R_m$/MPa | $R_{p0.2}$/MPa | A/% | Z/% | -40° C $KV_2$/J | | |
| Example 1 | Surface at 12.5mm | 100% tempered sorbite | 26.1 | 1115 | 985 | 23.5 | 72.5 | 95 | | 115 |
| | 1/2 wall thickness | 92% tempered sorbite +8% ferrite | 26.6 | 1048 | 917 | 24.5 | 74.5 | 108 | | 109 |
| Example 2 | Surface at 12.5mm | 100% tempered sorbite | 26.4 | 1102 | 980 | 22.5 | 70.5 | 86 | | 110 |
| | 1/2 wall thickness | 91% tempered sorbite +9% ferrite | 27.0 | 1024 | 908 | 24.5 | 73.5 | 93 | | 102 |
| Example 3 | Surface at 12.5mm | 100% tempered sorbite | 23.2 | 1155 | 1030 | 21.5 | 70.5 | 112 | | 126 |
| | 1/2 wall thickness | 94% tempered sorbite +6% ferrite | 23.5 | 1094 | 975 | 23.5 | 72.5 | 124 | | 117 |
| Comparative Example 1 | Surface at 12.5mm | 98% tempered sorbite +2% ferrite | 36.2 | 1035 | 925 | 12.5 | 49.5 | 41 | | 58 |
| | 1/2 wall thickness | 89% tempered sorbite +11% ferrite | 37.6 | 926 | 815 | 13.5 | 51.5 | 53 | | 54 |
| Comparative Example 2 | Surface at 12.5mm | 96% tempered sorbite +4% ferrite | 32.8 | 1015 | 954 | 12.5 | 55.5 | 56 | | 75 |
| | 1/2 wall thickness | 93% tempered sorbite +7% ferrite | 33.9 | 955 | 867 | 14.5 | 58.5 | 67 | | 70 |
| Comparative Example 3 | Surface at 12.5mm | 97% tempered sorbite +3% ferrite | 32.4 | 1028 | 968 | 12.5 | 54.5 | 51 | | 73 |
| | 1/2 wall thickness | 94% tempered sorbite +6% ferrite | 33.7 | 963 | 877 | 14.5 | 56.5 | 68 | | 68 |

The chemical composition and production method of the steel in Example 1 to 3 were properly controlled. The chemical composition ensures $17.0 \leq A \leq 20.3$, $0.17\% \leq Y$, $0.30\% \leq Z$, indicating a better strength, plasticity, toughness and contact fatigue properties of the steel. The proportion of chemical components in Comparative Examples 1 and 2 was inappropriate. In Comparative Example 2, the chemical composition was improperly controlled, resulting in low material strength, insufficient plasticity and toughness; and the heat treatment process was improper, resulting in unsatisfactory overall performance. In Comparative Example 3, the components were reasonably designed, but the heat treatment process was improper, resulting in insufficient material strength, toughness, and insufficient contact fatigue resistance.

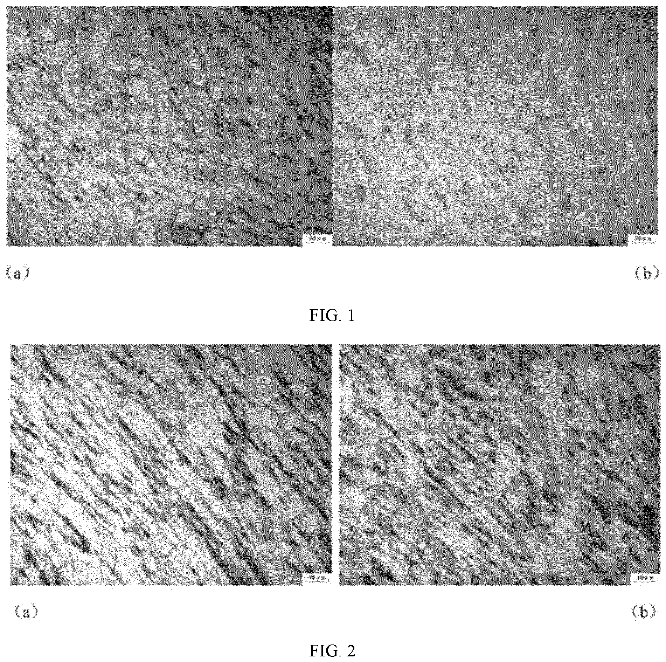

Figure 1 is a microscopic morphology diagram of the 1/2 wall thickness of the bearing ring produced in Example 1. The grain size after the first quenching was approximately 34 microns, and the grain size was refined to 26.6 microns after the second quenching. The grains were refined through corresponding heat treatment. The grain refinement can effectively improve the strength, low temperature toughness and fatigue performance of the material.

In contrast, although the steel in Comparative Example 2 was quenched and tempered twice, the chemical composition and process were inappropriate. As shown in FIG. 2, the grains were not significantly refined, and the grain size reached 33.9 microns, resulting in poor performance.

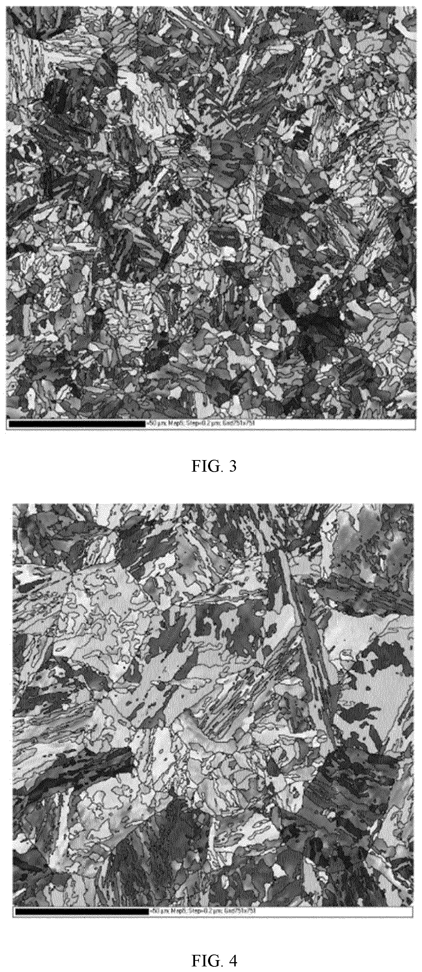

FIG. 3 and FIG. 4 further illustrate the reasons for the performance gap caused by components and processes from a microscopic perspective. The EBSD analysis in Example 1 shows that the microstructure is fine and uniform. In contrast, the microstructure of Comparative Example 2 is coarse. On the one hand, the fine structure can increase the crack expansion path, consume the impact capacity, and improve low-temperature toughness when the material is impacted by external forces; on the other hand, it can increase the internal stress and coordinated deformation ability of the material, thereby improving the fatigue performance of the material.

## Claims

1. A steel applicable to an economical long-service-life yaw bearing ring for high-power wind power, comprising by weight percentage: C 0.47% to 0.57%, Si 0.10% to 0.30%, Mn 0.70% to 0.90%, Cr 1.30% to 1.50%, Mo 0.30% to 0.50%, Cu 0.030% to 0.050%, V 0.035% to 0.075%, Nb 0.010% to 0.030%, Cu 0.030% to 0.050%, Al 0.015% to 0.025%, P≤0.015%, S≤0.010%, O≤0.0040%, N≤0.0080%, with the balance being Fe and other inevitable impurities.

2. The steel applicable to an economical long-service-life yaw bearing ring for high-power wind power according to claim 1, wherein a ratio of the chemical components meets the following requirements:

   1)

   $10.5 \leq (0.54 \times C\%) \times (1+3.34 \times Mn\%) \times (1+0.7 \times Si\%) \times (1.2+0.36 \times Cu\%) \times (1+0.37 \times Ni\%) \times (1+2.61 \times Cr\%) \times (1+3 \times Mo\%) \times (1+0.6 \times V\%) \times (1+0.7Nb\%) \leq 13.8;$

   2)

   $$0.24\% \leq C\% + (Mn\%)/6 - (Cr\% + Mo\% + V\% + Nb\%)/5 + (Cu\%)/15;$$

   3)

   $$0.60\% \leq (-3) \times Si\% + 0.8 \times Mn\% + 1.2 \times Mo\% + 1 \times Cu\% + 2 \times V\% + 2 \times Nb\%.$$

3. The steel applicable to an economical long-service-life yaw bearing ring for high-power wind power according to claim 2, wherein a precipitated phase in the steel comprises $M_7C_3$, $M_{23}C_6$ and MX.

4. A method for manufacturing a bearing ring using the steel applicable to an economical long-service-life yaw bearing ring for high-power wind power according to any one of claims 1 to 3, comprising: arc furnace or converter smelting → LF furnace refining → RH or VD vacuum degassing → round billet continuous casting → round billet heating → forging → punching → ring rolling → heat treatment → machining → flaw detection → packaging and warehousing.

5. The method according to claim 4, wherein the heat treatment comprises two quenching and tempering processes, comprising:

   first quenching and tempering process: first quenching; first tempering;
   second quenching and tempering process: second quenching; second tempering.

6. The method according to claim 5, wherein during the first quenching and tempering process, a furnace temperature is ≤600°C, a heating temperature of the first quenching ($T_1$, °C) is 900-1000°C, and a holding time of the first quenching (t, min) is determined by a wall thickness of the bearing ring (S, mm) and the heating temperature of the first quenching ($T_1$, °C), $S-T_1/20 \leq t_1 \leq S-T_1/80$; a heating temperature of the first tempering ($T_2$, °C) is 650-700°C, and a holding time of the first tempering ($t_2$, min) is determined by a wall thickness of the bearing ring (S, mm) and the heating temperature of the first tempering ($T_2$, °C), $S-T_2/10 \leq t_2 \leq S-T_2/50$, and then water cooling is performed.

7. The method according to claim 6, wherein during the second quenching and tempering process, a heating temperature of the second quenching ($T_3$, °C) is 800-900°C, and a holding time ($t_3$, min) is determined by the wall thickness of the bearing ring (S, mm) and the heating temperature of the second quenching ($T_3$, °C), $S-T_3/10 \leq t_3 \leq S-T_3/50$, and then water cooling is performed; a heating temperature of the second tempering ($T_4$, °C) is 600-700°C, and a holding time of the second tempering ($t_4$, min) is determined by the wall thickness of the bearing ring (S, mm) and the heating temperature of the second tempering ($T_4$, °C), $1.5 \times S-T_4/10 \leq t_4 \leq 1.5 \times S-T_4/50$, and then water cooling is performed.

8. A bearing ring, which is made by the method according to any one of claims 4 to 7, wherein a wall thickness of the bearing ring is ≥240mm, a tensile strength of the bearing ring at 1/2 of the wall thickness is ≥950MPa, a yield strength is ≥850MPa, and a $KV_2$ at -40°C is ≥80J, a contact fatigue life is ≥1 million times under a contact stress of 2000MPa.

9. The bearing ring according to claim 8, wherein a sorbite content at 12.5 mm on the surface of the bearing ring after tempering is 100%, and a sorbite content at 1/2 wall thickness is ≥ 91%.

(a) (b)

FIG. 1

(a) (b)

FIG. 2

FIG. 3

FIG. 4

## INTERNATIONAL SEARCH REPORT

| International application No. |
|---|
| **PCT/CN2023/114602** |

| | | |
|---|---|---|
| **A.** | **CLASSIFICATION OF SUBJECT MATTER** | |

C22C38/20(2006.01)i; C22C38/24(2006.01)i; C22C38/26(2006.01)i; C22C38/02(2006.01)i; C22C38/04(2006.01)i; C22C38/06(2006.01)i; C21D1/25(2006.01)i; C21D9/40(2006.01)i

According to International Patent Classification (IPC) or to both national classification and IPC

| **B.** | **FIELDS SEARCHED** |
|---|---|

Minimum documentation searched (classification system followed by classification symbols)

IPC: C22C, C21D

Documentation searched other than minimum documentation to the extent that such documents are included in the fields searched

Electronic data base consulted during the international search (name of data base and, where practicable, search terms used)

DWPI, SIPOABS, CNTXT, CNKI: 风电, 轴承, 钢, 碳, C, 硅, Si, 锰, Mn, 铬, Cr, 钼, Mo, 铜, Cu, 钒, V, 铌, Nb, wind power, carbon, silicon, manganese, chromium, molybdenum, copper, vanadium, niobium

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | CN 115558870 A (MAANSHAN IRON & STEEL CO., LTD.) 03 January 2023 (2023-01-03) claims 1-9 | 1-9 |
| X | CN 112567061 A (NIPPON STEEL CORP.) 26 March 2021 (2021-03-26) description, paragraphs 30-49 and 90 | 1, 4-5, 8-9 |
| A | CN 104988421 A (YANSHAN UNIVERSITY) 21 October 2015 (2015-10-21) entire document | 1-9 |
| A | CN 105220062 A (LI BAI) 06 January 2016 (2016-01-06) entire document | 1-9 |
| A | CN 107988565 A (CENTRAL IRON & STEEL RESEARCH INSTITUTE et al.) 04 May 2018 (2018-05-04) entire document | 1-9 |
| A | JP H10251806 A (SANYO SPECIAL STEEL CO., LTD.) 22 September 1998 (1998-09-22) entire document | 1-9 |
| A | JP H11141638 A (NIPPON SEIKO K. K.) 25 May 1999 (1999-05-25) entire document | 1-9 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 November 2023** | **24 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/114602** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 3945821 A (LATROBE STEEL COMPANY) 23 March 1976 (1976-03-23)<br>entire document | 1-9 |

Form PCT/ISA/210 (second sheet) (July 2022)

## INTERNATIONAL SEARCH REPORT
### Information on patent family members

International application No.

**PCT/CN2023/114602**

| Patent document cited in search report | | | Publication date (day/month/year) | Patent family member(s) | | | Publication date (day/month/year) |
|---|---|---|---|---|---|---|---|
| CN | 115558870 | A | 03 January 2023 | CN | 115558870 | B | 23 June 2023 |
| CN | 112567061 | A | 26 March 2021 | WO | 2020040190 | A1 | 27 February 2020 |
| | | | | JPWO | 2020040190 | A1 | 08 April 2021 |
| | | | | JP | 7063386 | B2 | 09 May 2022 |
| | | | | CN | 112567061 | B | 16 December 2022 |
| CN | 104988421 | A | 21 October 2015 | None | | | |
| CN | 105220062 | A | 06 January 2016 | CN | 105220062 | B | 22 March 2017 |
| CN | 107988565 | A | 04 May 2018 | CN | 107988565 | B | 27 September 2019 |
| JP | H10251806 | A | 22 September 1998 | None | | | |
| JP | H11141638 | A | 25 May 1999 | US | 6066068 | A | 23 May 2000 |
| | | | | JP | 3702618 | B2 | 05 October 2005 |
| | | | | DE | 19850867 | A1 | 02 June 1999 |
| | | | | DE | 19861260 | A1 | 03 July 2003 |
| | | | | DE | 19850867 | C2 | 23 October 2003 |
| | | | | DE | 19861260 | B4 | 22 September 2005 |
| US | 3945821 | A | 23 March 1976 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211380397
- CN 104726783 A
- CN 104178695 A